# FASCICULE DE BREVET EUROPEEN

(11) **EP 4 168 150 B1**
(45) Date de publication et mention de la délivrance du brevet: **13.08.2025**
(21) Numéro de dépôt: 21729822.3
(22) Date de dépôt: 25.05.2021
(51) Int. Cl.: B01D 15/18, B01D 15/22, F16K 11/085, G01N 30/42

(54) **ROTOR UNIVERSEL POUR TOUS SYSTÈMES NÉCESSITANTS DE SOUMETTRE DES FLUIDES À DES ACCÉLÉRATIONS CENTRIFUGES**
UNIVERSALROTOR FÜR ALLE SYSTEME, DIE DER FLUIDBEAUFSCHLAGUNG VON ZENTRIFUGALBESCHLEUNIGUNGEN AUSGESETZT SIND
UNIVERSAL ROTOR FOR ALL SYSTEMS USED TO SUBJECT FLUIDS TO CENTRIFUGAL ACCELERATIONS

(30) Priorité: 22.06.2020 FR 2006514
(43) Date de publication de la demande: 26.04.2023
(73) Titulaire: Couillard, François, 56860 Sene (FR); Legrand, Jack, 44600 Saint-Nazaire (FR)
(72) Inventeur: Couillard, François, 56860 Sene (FR); Legrand, Jack, 44600 Saint-Nazaire (FR)
(74) Mandataire: Hirsch & Associés
(86) Numéro de dépôt international: PCT/EP2021/063872
(87) Numéro de publication internationale: WO 2021/259577

(56) Documents cités:
- EP-A1- 1 134 581
- WO-A1-2016/055821
- WO-A1-2018/117031
- FR-A1- 2 791 578
- FR-A1- 2 868 165
- MURAYAMA W ET AL: "A new centrifugal counter-current chromatograph and its application", JOURNAL OF CHROMATOGRAPHY A, ELSEVIER, AMSTERDAM, NL, vol. 239, 30 April 1982 (1982-04-30), pages 643 - 649, XP026538796, ISSN: 0021-9673, [retrieved on 19820430], DOI: 10.1016/S0021-9673(00)82022-1

## Description

### Domaine technique

La présente invention concerne un rotor universel pour tous systèmes nécessitant de soumettre des fluides à des accélérations centrifuges, ce rotor étant destiné à effectuer toutes opérations nécessitant la circulation de fluides monophasiques ou polyphasiques, en vue de réactions chimiques et biochimiques, extractions, purifications, séparations.

### Techniques antérieures

On connait bien et depuis longtemps des appareils consistant en des réacteurs permettant des réactions chimiques et biochimiques, des appareils permettant la mise en œuvre d'opérations d'extraction, des appareils permettant la réalisation d'opérations de purification, des appareils permettant d'effectuer des opérations de séparation telles celles effectuées par chromatographie de partage centrifuge (CPC). Les documents WO 2016/055821 A1 et FR 2868165 A1 décrivent de tels dispositifs de l'art antérieur.

Un premier inconvénient de l'art antérieur relatif aux opérations effectuées par chromatographie de partage centrifuge (CPC), opérations d'extraction, opérations de purification, opérations de séparation est dû à la conception même des cellules et des canaux de liaison les reliant en série, creusés dans l'épaisseur des disques qui impose l'installation de joints d'étanchéité, généralement souples, par exemple en Téflon, entre chaque disque, fermant ainsi chaque cellule et chaque canal selon le plan du disque, donc perpendiculairement à l'axe principal de chaque cellule. Même si la cellule à des formes arrondies pour faciliter l'homogénéité de la dispersion en vue d'un meilleur échange de matières entre les deux phases, les plans des joints créent avec la cellule des angles droits, voire aigus, en raison de l'élasticité du joint qui s'insère partiellement dans les cellules, ce qui est peu propice à une dispersion homogène des liquides, et donc constitue un inconvénient majeur. Enfin, ces plans de joints souples, ont d'une part une certaine porosité qui conduit à une adsorption de certaines molécules et à une désorption ensuite, ce qui peut limiter la pureté des molécules d'intérêt. D'autre part, ils sont soumis à des variations de pression continuelles des liquides, se déforment dans le temps et modifient la géométrie des cellules, d'où un vieillissement des joints, même si par un quelconque moyen on tente de limiter ce vieillissement.

Un deuxième inconvénient de l'art antérieur relatif à la chromatographie de partage centrifuge (CPC) et aux opérations d'extraction, opérations de purification, opérations de séparation est dû au fait que les cellules sont reliées entre elles par un canal en forme de ruban. On calcule et on vérifie aisément que cette forme de conduit, pour une section donnée, produit une perte de charge bien supérieure à celle provoquée par un conduit de même section cylindrique ou de géométrie très proche. Pour limiter des pressions trop importantes et dans certains cas pour des raisons de difficulté d'usinage, on est amené à augmenter l'épaisseur de ces canaux rectangulaires, donc à augmenter les volumes excessifs desdits canaux. Ceux-ci n'entrent pas dans le processus de séparation dans lesquels passent les produits en cours de séparation mais augmentent d'autant les temps de passage et en conséquence le temps de séparation et la consommation de solvants.

Un troisième inconvénient de l'art antérieur relatif à la chromatographie de partage centrifuge (CPC) et relatif aux opérations d'extraction, opérations de purification, opérations de séparation, est dû au fait que la masse et donc la capacité calorifique des disques des rotors n'est pas favorable à une régulation thermique précise et plus particulièrement à une constante de temps thermique aussi courte que possible, particulièrement lors du fonctionnement en réacteur. La température des fluides traversant les cellules lors des réactions, pouvant être endothermiques ou exothermiques, peut devenir largement préjudiciable aux performances ou même mettre en cause la sécurité si elle n'est pas strictement contrôlée.

Un quatrième inconvénient de l'art antérieur relatif à la chromatographie de partage centrifuge (CPC) et relatif aux opérations d'extraction, opérations de purification, opérations de séparation, est dû au fait qu'avec les rotors de l'art antérieur, si l'on augmente le volume injecté au-delà d'une certaine valeur par rapport au volume des cellules, il apparait un phénomène de choc hydrauliques, appelé communément "coups de bélier" qui détruit partiellement ou totalement l'équilibre hydrodynamique des premières cellules, effet qui se propage jusqu'aux dernières cellules du rotor et met fin à la manipulation.

Selon les techniques utilisées jusqu'à présent, les rotors utilisés dans les appareils de chromatographie de partage centrifuge (CPC) pour la séparation de composants, comportent dans leur épaisseur et sur toute leur périphérie une succession de cellules disposées suivant une direction radiale ou oblique mises en séries par un ensemble de fines canalisations sinueuses connectées à l'entrées et à la sortie de chaque cellule, les circuits de tous les disques communiquant les uns avec les autres. La rotation de l'empilement crée un champ d'accélération centrifuge important qui permet par exemple de maintenir une phase liquide, dite stationnaire fixe, tandis qu'une phase mobile percole ladite phase stationnaire en mode dit ascendant si elle est plus légère que la phase stationnaire, ou en mode dit descendant si elle est plus lourde. Dans ce type d'appareil constitué par l'interconnexion en série d'une ou plusieurs chaînes de cellules, s'effectue la séparation des constituants d'une charge en solution liquide comprenant au moins deux constituants de coefficients de partage différents tels qu'ils sont entraînés à des vitesses inégales par la phase mobile qui peut être l'une ou l'autre des phases liquides.

En fait, les rotors utilisés dans ces appareils connus de chromatographie de partage centrifuge (CPC) peuvent être utilisés dans toutes les applications nécessitant un champ d'accélération centrifuge et une très bonne régulation thermique, entre autres pour effectuer des purifications, séparations, extractions avec des solvants classiques mais particulièrement avec du CO2 en phase liquide ou supercritique en chromatographie de partage centrifuge (CPC), techniques dans lesquelles les molécules sont purifiées et/ou séparées entre deux phases liquides, ayant lieu dans chaque cellule, le transfert de masse étant favorisé par une bonne dispersion de la phase mobile arrivant par le canal d'entrée de chaque cellule.

Lorsque l'on souhaite construire un appareil industriel de production, l'homme de l'art sait effectuer le changement d'échelle à partir de séparations effectuées sur un appareil de laboratoire, c'est-à-dire, le nombre de cellules, le volume desdites cellules, les débits de la phase mobile, la pression hydrostatique générée, etc...

Cependant, ces paramètres étant relativement nombreux et les mesures entachées d'erreurs, feront que l'appareil construit fonctionnera, mais ne sera ni exactement à son optimum ni modifiable simplement avec les technologies de l'art antérieur.

Les appareils de l'art antérieur sont constitués de rotors dont le nombre et le volume des cellules sont définis avant leur construction et ne sont pas modifiables après, ce qui empêche les possibilités d'optimisation pour les différentes applications pouvant se présenter. Pour simplifier on restera dans le domaine de la séparation par CPC, à savoir : si un utilisateur possède un rotor de l'art antérieur constitué de 500 cellules, qu'il souhaite effectuer une séparation donnée, pour laquelle l'optimum est 500 cellules, tout fonctionne pour le mieux. Cependant, pour une autre séparation dans laquelle il lui faudrait 1000 cellules, ladite séparation ne sera que partiellement résolue. A l'inverse, pour une autre séparation à effectuer avec ce même rotor de 500 cellules, alors qu'un rotor de 200 serait l'optimum, la durée de la séparation sera multipliée par environ 2,5 ce qui entraine une perte de temps, une consommation de solvant augmentée et une réduction de la productivité dans le même rapport.

La présente invention apporte en soi, pour ce qui concerne les rotors utilisés pour la séparation, plus particulièrement en chromatographie de partage centrifuge (CPC), des avantages importants par rapport aux appareils de chromatographie de partage centrifuge (CPC) connus, ne fut-ce que par leur possibilité de double emploi mais encore pour leur facilité d'utilisation et leur facilité d'adaptation aux conditions opératoires.

En effet, la présente invention consiste en un rotor universel permettant :
- d'une part de séparer des mélanges liquides un ou plusieurs composants présentant des coefficients de partage différents, et
- d'autre part d'effectuer des réactions chimiques entre plusieurs composants.

Les rotors selon l'invention peuvent également être appliqués aux deux mises en œuvre successives précitées à savoir une réaction, entre deux ou plusieurs composés, suivie d'une séparation du produit recherché dans le mélange réactionnel résultant de la réaction chimique ou une séparation d'un composant contenu dans un mélange suivie d'une réaction chimique du composant obtenu avec un autre produit.

La présente invention peut donc être considérée pour chacune de ces deux applications et pour une utilisation successive des deux applications.

### Résumé de l'invention.

La présente invention a pour objet un rotor universel pour opérations nécessitant de soumettre des fluides à des accélérations centrifuges dans le cadre d'opérations nécessitant la circulation de fluides monophasiques ou polyphasiques, en vue de réactions chimiques et biochimiques opérant notamment en continu, purifications, extractions, séparations, chromatographie de partage centrifuge (CPC), extractions liquide-liquide entre autres.

Le rotor selon l'invention est susceptible d'être mis en œuvre comme réacteurs chimiques et/ou biochimiques, extracteurs liquide-liquide, des opérations de purification, des chromatographes de partage centrifuge (CPC), entre autres.

En fait, les phases liquides ou solvants peuvent consister, entre autres, en solvants organiques, ioniques, NADES (Natural deep eutectic solvent), CO2 en phase liquide ou supercritique circulant dans des cellules reliées les unes aux autres par des canaux, et s'appliquer, dans différents domaines, tels que ceux de la réaction chimique et biochimique, de l'extraction, de la purification de la séparation.

La présente invention a pour objet un rotor universel pour opérations nécessitant de soumettre des fluides à des accélérations centrifuges impliquant la circulation de fluides monophasiques ou polyphasiques, en vue de traitements consistant en purifications, extractions, séparations, chromatographie de partage centrifuge (CPC), extractions liquide-liquide, réactions chimiques et biochimiques, dans lequel:
- le rotor est formé d'un disque ou de plusieurs disques empilés les uns sur les autres,
- chacun desdits disques est constitué d'un support dans lequel est inséré une couronne (A1) constituée de l'assemblage d'un ou de plusieurs secteurs circulaires,
- dans le cas d'un seul secteur circulaire, un espace est aménagé entre les deux extrémités de l'unique secteur circulaire.
   dans le cas de plusieurs secteurs circulaires l'espace est aménagé entre les extrémités de deux secteurs circulaires contigus.
- un connecteur de liaison est inséré dans ledit espace,
- le connecteur de liaison dispose des moyens de dérivation consistant en canaux nécessaires pour que la phase liquide entrant par les entrées dans ledit connecteur de liaison soit guidée pour parcourir ledit réseau de cellules jusqu'aux sorties dudit connecteur de liaison, lesquelles sorties sont en contact direct avec les entrées du connecteur de liaison du disque suivant et ainsi de suite.

Selon un mode de réalisation de l'invention, le rotor est formé d'un secteur circulaire unique comportant un réseau de cellules successives et interconnectées entre elles par des canaux et disposés dans un plan plus ou moins médian de son épaisseur, caractérisé en ce qu'il y a au moins un intervalle entre ses deux extrémités pour y disposer de manière étanche un connecteur de liaison, ledit connecteur de liaison comprenant au moins une entrée et au moins une sortie destinées à permettre respectivement l'entrée d'un mélange liquide dans des réseaux de cellules et la sortie dudit mélange des canaux des cellules.

Selon un autre mode de réalisation de l'invention, les secteurs circulaires sont réalisés à partir de deux demi-secteurs circulaires dont chacun est l'image miroir de l'autre, tous deux comportant sur leur plan miroir, les demi-cellules et demi-canaux, les deux demi-secteurs étant assemblées de façon étanche, de préférence par soudure diffusion, face contre face, pour devenir un secteur circulaire.

Selon encore un mode de réalisation de l'invention, les secteurs circulaires sont préférentiellement réalisés en une seule pièce, par exemple directement par construction additive.

Selon encore un autre mode de réalisation de l'invention, le secteur circulaire unique comporte dans son épaisseur un ou plusieurs conduits circulaires de section plus ou moins rectangulaire, en l'occurrence trois, délimités par des parois concentriques et disposés de telle sorte que les rayons moyens de chacun desdits conduits circulaires soient sensiblement disposés respectivement sur les même rayons moyens de ceux des réseaux circulaires desdites cellules correspondantes, afin d'y faire circuler un fluide de contrôle de la température ou fluide de thermostatisation de façon la plus identique possible pour chacun desdits réseaux de cellules.

Selon une forme de réalisation de l'invention, le connecteur de liaison comporte les dérivations nécessaires pour que le fluide de contrôle de la température ou fluide de thermostatisation entrant en parcourt tous les conduits connectés en séries de chacun des secteurs circulaires constituant la couronne considérée puis, guidé par ledit connecteur de liaison, passe au connecteur de liaison du disque suivant pour parcourir de la même façon les conduits connectés en série, et ainsi de suite jusqu'à la sortie du rotor.

Selon un mode de réalisation encore autre de l'invention, ledit connecteur de liaison comporte également une entrée et une sortie permettant l'entrée et la sortie d'un fluide de contrôle de la température ou fluide de thermostatisation pour qu'il parcourt le ou les conduits de contrôle de la température ou du fluide de thermostatisation.

Selon une forme de réalisation de l'invention, les cellules et canaux ont des parois aussi fines que possible, et sont munies d'ailettes, lesdites ailettes étant elles même solidaires des parois internes du secteur circulaire.

Selon une autre forme de réalisation de l'invention, le connecteur de liaison comprend au moins une entrée et au moins une sortie destinée à permettre respectivement l'entrée d'un mélange liquide dans les réseaux de cellules et la sortie dudit mélange des réseaux de cellules, de telle sorte qu'entre la sortie et l'entrée, la phase liquide parcourt toutes les cellules et canaux du disque considéré.

Selon encore une forme de réalisation de l'invention, le connecteur de liaison (B6) peut être installé en lieu et place du connecteur de liaison (A6), auquel cas on ajoute une vanne à une ou plusieurs voies à boisseau à deux positions, "ON" et "BYPASS", permettant de choisir la position telle qu'en position "ON" de ladite vanne une phase liquide entrant par exemple en (31) soit dirigée de ladite vanne à l'entrée du secteur circulaire contigu en (13) pour parcourir tout le réseau de cellules du disque et arriver en (14) du dernier secteur circulaire puis en (35) puis en (36) dudit connecteur de liaison, pour entrer dans le connecteur de liaison du disque contigu suivant mais, si le boisseau de cette vanne est en position "BYPASS", la phase liquide entrant en (31) est dirigée directement en (36) sans parcourir les cellules du disque concerné, celui-ci se trouvant court-circuité, ce qui permet à l'utilisateur d'ajuster le nombre de cellules à chacune de ses diverses applications par pas du nombre de cellules contenu dans un disque.

Selon encore une autre forme de réalisation de l'invention, chaque secteur circulaire d'une couronne, est formé de deux demi-secteurs circulaires superposés, face contre face, ou d'un empilement de telles superpositions, chacun de ces demi-secteurs comprenant des demi-cellules dont les angles (20) sont remplacés par des congés formant des arrondis.

Selon une autre forme de réalisation de l'invention, pour augmenter la productivité dudit rotor, en mode CPC, en mode ascendant, les "n" premières cellules dudit rotor ont des volumes décroissants selon une fonction à déterminer allant de (V7) à (V) avec (V7>V), V étant le volume constant de la majeure partie des cellules dudit rotor.

La présente invention a également pour objet, l'utilisation du rotor universel dans des opérations nécessitant de soumettre des fluides à des accélérations centrifuges dans le cadre d'opérations nécessitant la circulation de fluides monophasiques ou polyphasiques, en vue de traitements de purification, extraction, séparation, chromatographie de partage centrifuge (CPC), extractions liquide-liquide;

La présente invention a encore également pour objet, l'utilisation du rotor universel dans des opérations nécessitant de soumettre des fluides à des accélérations centrifuges dans le cadre d'opérations nécessitant la circulation de fluides monophasiques ou polyphasiques, en vue de réactions chimiques et/ou biochimiques.

### Brève description des figures.

L'invention sera mieux comprise à la lecture de la description suivante des modes de réalisations préférentiels, donnés à titre de simple exemple figuratif et non limitatif, et accompagnés des figures suivantes :
[FIG. 1] représentation schématique, en vue éclatée, d'une couronne (A1) constituée de quatre secteurs circulaires (2 à 5) et d'un connecteur de liaison (6) selon l'invention.
[FIG. 2] représentation schématique en vue éclatée, d'une couronne (A1) insérée dans sa cuvette de centrage dont l'axe est (8) pour former un disque (A2);
[FIG. 3] représentation schématique en vue éclatée d'un exemple de secteur circulaire (A3) par l'assemblage de deux demi-secteurs circulaires (10 et 11) pour former un secteur circulaire selon l'invention;
[FIG. 4] représentation schématique d'un exemple de connecteur de liaison statique (A6) entre deux secteurs circulaires contiguës à deux réseaux de cellules de volumes différents, ainsi que d'une voie (37-38) pour la circulation d'un fluide de contrôle de la température dans le rotor selon l'invention;
[FIG. 5] représentation schématique d'un autre exemple de connecteur de liaison (B6) avec vanne à deux positions entre deux secteurs circulaires contiguës à deux réseaux de cellules de volumes différents, ainsi que d'une voie pour la circulation d'un fluide de régulation thermique de la température du rotor selon l'invention;
[FIG. 6A] représentation schématique en trois coupes d'un exemple de rotor selon un mode de réalisation de l'invention, limité à 6 disques pour ne pas surcharger la figure montrant en détail les différents trajets fluidiques des phases mobile et thermique;
[FIG. 6B] représentation schématique en coupe de deux vannes à deux positions installées dans le connecteur de liaison selon un plan perpendiculaire à leur axe et passant par un des canaux de distribution;
[FIG. 7] représentation schématique d'un exemple de construction d'un rotor monté sur un axe vertical selon un mode de réalisation de l'invention;
[FIG. 8] représentation schématique d'un exemple montrant la possibilité d'ajouter ou d'enlever simplement des disques du rotor selon l'invention dans le but d'adapter sa géométrie aux applications diverses, pour effectuer du service après-vente ou pour toutes autres raisons.
[FIG. 9] représentation schématique d'un exemple de dispositions des cellules dans un rotor de CPC permettant d'augmenter le volume injectable.

### Description de modes de réalisation

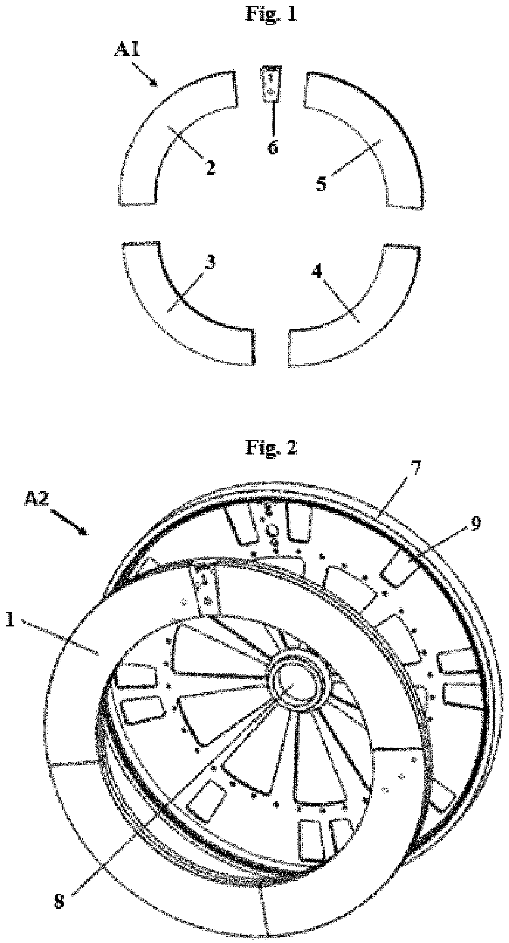

**La** **figure 1** montre un exemple de couronne (A1) constituées de quatre secteurs circulaires (2, 3, 4, 5) et d'un connecteur de liaison (6) d'un rotor selon l'invention.

Les figures 2, 3, 4, 5 et 6 décrites plus en détail ci-dessous, montrent un ou plusieurs réseaux concentriques de cellules formés en surface de demi-secteurs circulaires, leur assemblage face contre face formant un secteur circulaire (A3). Ces cellules sont interconnectées en série par des canaux figure (3).

La couronne (A1) représentée figure 1, comprend un ensemble de secteurs circulaires ouverts (2 à 5) présentant chacun deux extrémités et comprenant au moins un réseau de cellules concentrique à l'axe dudit secteur circulaire, formé sur un plan plus ou moins médiant de son épaisseur. Dans l'exemple représenté à la figure 1, la couronne (A1) - (2 à 6) est formée de plusieurs secteurs circulaires distincts, en l'occurrence quatre secteurs circulaires (2 à 5) distincts, comprenant chacun une partie du ou des réseaux de cellules qui sont assemblés deux à deux de manière étanche en sorte d'assurer la continuité de ce réseau de cellules relié au connecteur de liaison (6), qui seront décrits plus en détail ci-dessous. Le nombre de secteurs circulaires peut bien entendu varier. En particulier, l'appareil peut très bien comprendre un unique secteur circulaire qui comprend alors tout le ou les réseaux de cellules de la couronne (A1).

Dans le cas de plusieurs secteurs circulaires (2 à 5), les deux extrémités des secteurs circulaires (2 et 5) correspondent à une extrémité du premier secteur circulaire (2) non raccordée à un autre secteur circulaire, et une extrémité du dernier secteur circulaire (5) également non raccordée à un autre secteur circulaire.

Dans le cas d'un unique secteur circulaire, ses deux extrémités correspondent à celles d'un assemblage de plusieurs secteurs circulaires.

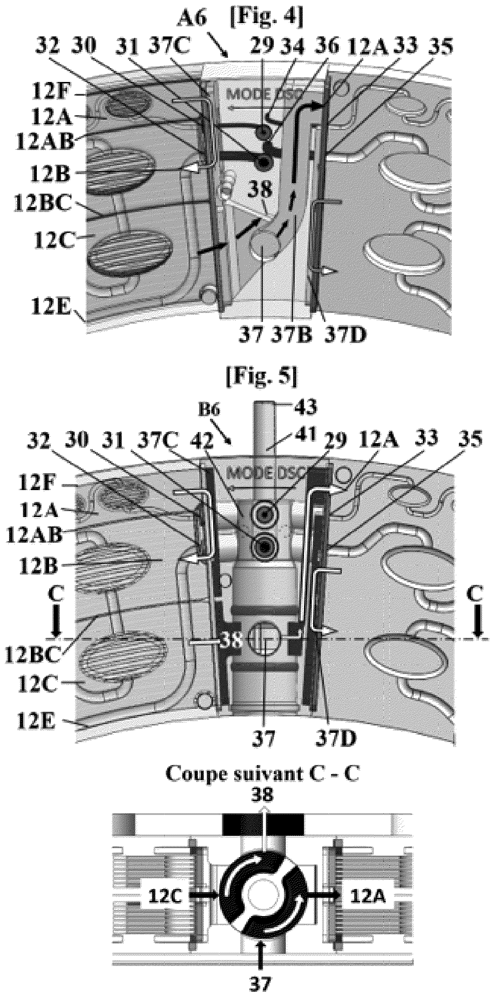

Le connecteur de liaison (6) est intercalé de manière étanche entre les deux extrémités de l'assemblage des secteurs circulaires (2 à 5). Ce connecteur de liaison permet dans un mode de réalisation de l'invention, de faire entrer la phase mobile et l'échantillon à injecter dans la couronne (A1), puis après qu'ils en ont parcouru toutes les cellules, de les diriger dans le connecteur de liaison de la couronne adjacente qui à son tour effectue la même opération, et ainsi de suite jusqu' à la dernière couronne du rotor constitué par leur empilement. Les divers composants de l'échantillon entrainés par la phase mobile, dans le cas d'une application de séparation CPC par exemple, sont séparés au cours du trajet dans les cellules et canaux puis, sont détectés et/ou collectés par un des moyens bien connus en chromatographie de partage centrifuge (CPC) liquide/liquide ou pour des applications effectuées dans d'autres domaines. Le connecteur de liaison peut comporter d'autres fonctions selon l'invention qui seront présentées dans le descriptif détaillé des figures 4 et 5.

**La** **figure 2** présente en vue éclatée un mode de réalisation non limitatif de l'assemblage de la couronne (A1) dans sa cuvette de centrage pour former un disque de rotor (A2). Les tolérances mécaniques entre le diamètre intérieur de la cuvette de centrage et le diamètre extérieur de la couronne (A1) doivent être telles que la couronne (A1) soit fermement serrée par la cuvette de centrage (7) afin d'assurer une bonne tenue mécanique et une bonne étanchéité entre les différentes parties composant la couronne (A1). L'opération d'insertion peut être par exemple réalisée par un procédé de dilatation thermique par différence de température entre les deux pièces à assembler. Des ouvertures (9) sont aménagées sur le plan de la cuvette de centrage pour permettre l'éventuelle extraction à la presse de la couronne (A1). L'alésage central (8) de la cuvette de centrage a un ajustement glissant ayant un minimum de jeu sur l'arbre (85) du rotor afin de le centrer au mieux et de permettre de le glisser sur ledit arbre dudit rotor figures (7 et 8). Chaque disque de rotor (A2), préalablement rempli de liquide est équilibré statiquement et dynamiquement jusqu'à des accélérations légèrement supérieures à l'accélération maximale prévue lors de la conception de l'appareil.

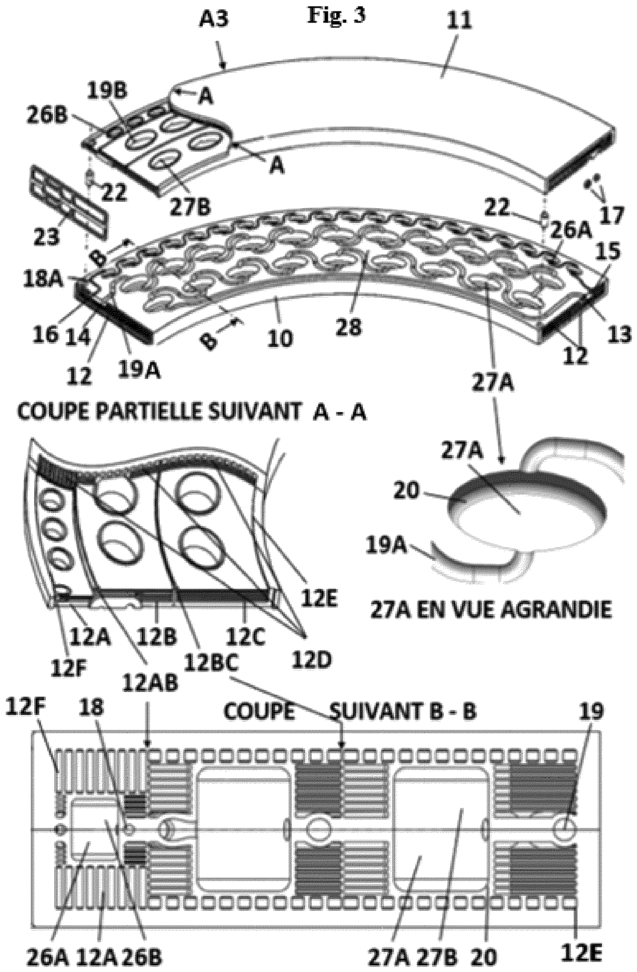

**La** **figure 3** présente en vue éclatée un secteur circulaire (A3) selon un mode de réalisation de l'invention, constitué d'un demi-secteur circulaire (10) et d'un demi-secteur circulaire (11), chacun étant l'image miroir de l'autre par rapport au plan (28) dudit demi-secteur circulaire (10); après leur assemblage face à face de manière étanche, cela constitue un secteur circulaire (A3). Dans le présent exemple de réalisation de l'invention, le secteur circulaire comporte deux réseaux de vingt cellules chacun, dont l'un est constitué de cellules (26) de volume (V) et l'autre de cellules (27) de volume (8V). Pour une meilleure compréhension des figures, on notera par exemple qu'une cellule (27) est constituée de l'assemblage d'une demi-cellule (27A) réalisée sur le demi-secteur circulaire (10) et d'une demi-cellule (27B) réalisée sur le demi-secteur circulaire (11), il en est de même pour les canaux. Lesdites demi-cellules ne sont pas obligatoirement l'image l'une de l'autre car elles peuvent être dissymétriques, pourvu qu'au plan de contact (28) entre les deux demi-secteurs, elles aient rigoureusement le même profil.

Leurs canaux de liaisons (18 et 19) (coupe suivant B-B) respectifs ont des sections adaptées aux débits prévus nécessaires au fonctionnement des cellules. Ces deux demi-secteurs circulaires sont positionnés face à face de façon aussi précise que possible, par exemple par deux goupilles (22) insérées en ajustement légèrement serré dans deux trous cylindriques du demi-secteur circulaire (10). Dans le demi-secteur circulaire miroir (11) sont réalisés deux trous en ajustement glissant, dont l'un est cylindrique et l'autre oblong correspondant aux positions des goupilles insérées dans le demi-secteur circulaire (10) afin d'effectuer un assemblage non contraint des deux demi-secteurs circulaires, par exemple par soudure diffusion. On utilisera de préférence des goupilles fabriquées dans la même nuance de matière que celle utilisée pour la fabrication des demi-secteurs circulaires, ou une matière ayant un coefficient de dilatation thermique aussi proche que possible, afin d'éviter que d'éventuelles contraintes mécaniques ne provoquent des déformations dues aux dilatations thermiques durant l'opération de soudure. L'entrée de la phase mobile et de l'échantillon, quand on opère en mode descendant dans le secteur circulaire (A3) s'effectue par les entrées (13) ou (15) et au travers des joints d'étanchéité inter secteurs (17) correspondants au réseau de cellules choisi. Les sorties correspondantes sont respectivement en (14) et (16). Le joint plat (23) assure l'étanchéité entre les secteurs circulaires et le connecteur de liaison (6) pour l'éventuelle circulation d'un fluide thermique à l'intérieur (12) des deux demi-secteurs circulaires qui sont en l'occurrence constitués de trois conduits distincts (12A, 12B et 12C), séparés par des parois (12F, 12AB, 12BC et 12D), chacun étant centré respectivement sur les mêmes cercles que chacun des trois réseaux de cellules. Ces cellules ont des parois fines et sont équipées d'ailettes, ce qui permet de réduire la résistance thermique entre le fluide de contrôle de la température ou fluide de thermostatisation et les phases liquides traversant les cellules et canaux tout en augmentant la résistance mécanique desdites cellules, par leurs dispositions perpendiculaires entre elles.

Selon l'invention on réalise des arrondis ou "congés" (20) montrés en détail sur la vue agrandie de la demi-cellule (27A), en lieu et place des angles vifs desdites cellules, ces derniers dégradant considérablement le fonctionnement hydrodynamique et en conséquence les performances de l'appareil. Ce mode peut être avantageusement appliqué à toutes les géométries imaginables de cellules, qu'elles soient symétriques ou dissymétriques et quelles qu'en soient leurs diverses applications. Les canaux de liaison (18) et (19) entre les cellules sont avantageusement à section circulaire, également pour un bon fonctionnement hydrodynamique. Cependant, dans le cas d'un usinage mécanique classique desdits canaux, on pourra pour des raisons de facilité d'usinage et/ou d'état de surface, leur donner une section polygonale, par exemple carrée en prenant soin d'arrondir tous les angles afin d'obtenir une section la plus proche possible d'une section circulaire.

**La** **figure 4** présente un mode de réalisation du connecteur de liaison de configuration fixe, en l'occurrence (A6), comprenant une ou plusieurs entrées pour les phases liquides (29 & 31) et sorties correspondantes (30 & 32), reliées respectivement en mode descendant à (15 & 13) du secteur circulaire (A3) contigu dudit connecteur de liaison. La phase mobile traversant le réseau des cellules choisies (26 ou 27) et canaux (18 ou 19) dudit secteur circulaire, en sort en (16) ou (14), sont connectés aux entrées (15 & 13) du second secteur circulaire, et ainsi de suite jusqu'au dernier secteur circulaire de la couronne contiguë de la deuxième face dudit connecteur de liaison, la phase mobile y entrant en (33) ou (35) pour en ressortir par (34) ou (36) dudit connecteur de liaison et entre en (29) ou (31) du connecteur de liaison adjacent du disque suivant et ainsi de suite de disque en disque jusqu'au dernier disque du rotor, les sorties (34) ou (36) étant reliées aux sorties (54) ou (56) dudit rotor.

Lorsque l'entrée/sortie d'un réseau de cellules est choisie, il est recommandé de fermer de façon étanche l'autre réseau par deux bouchons au niveau des flasques du rotor, afin d'éviter toute perte de phase liquide durant le fonctionnement, ce qui pourrait entrainer un déséquilibre dynamique du rotor en rotation.

Pour une meilleur compréhension, on a représenté les connecteurs de liaison (A6 & B6), figures 4 et 5 entre deux secteurs circulaires, celui disposé à gauche en semi transparence pour mieux expliquer l'exemple de réalisation, en l'occurrence comportant des ailettes et des parois concentriques (12AB & 12BC), le secteur circulaire placé à droite, non transparent pour montrer les connections entre lesdits connecteurs de liaison et les réseaux de canaux et cellules des secteurs circulaires (A3), (2 & 5).

Ledit connecteur de liaison (A6 ou B6) (Fig. 3, 4 et 5 et coupe selon (C - C) comporte une entrée (37) pour y injecter le fluide de contrôle de la température ou fluide de thermostatisation qui est guidé par le canal (37B) dans le conduit (12A) du premier secteur circulaire, lequel est délimité par les parois concentriques (12F & 12AB), il parcourt ledit canal des secteurs circulaires successifs jusqu'au connecteur de liaison, passe dans le canal (37C) dudit connecteur de liaison, puis entre dans le conduit (12B), délimité par les parois (12AB et 12BC) qu'il parcourt jusqu'au connecteur de liaison qui le conduit par son canal (37D) à l'entrée du conduit (12C) délimité par les parois concentriques (12BC et 12E), parcourt ledit conduit jusqu'au connecteur de liaison et ressort par la connexion (38) disposée dans le même axe que (37) et sur la face opposée qui est adjacente de l'entrée (38) du connecteur de liaison du disque suivante l'empilement et ce jusqu'à la sortie du dernier disque du rotor qui conduit ledit liquide de contrôle de la température ou fluide de thermostatisation aux sorties (58 ou 59).

**La** **figure 5** présente un deuxième mode majeur de réalisation selon l'invention du connecteur de liaison (6), en l'occurrence (B6). Il comporte toutes les mêmes fonctions que celles du connecteur de liaison (A6) de la figure 4 et les mêmes numéros repères, auquel on a ajouté une vanne (42) par exemple du type à boisseau (41) à deux positions, Run et Bypass.

En position Run la phase mobile entre dans le connecteur de liaison en (29 ou 31) pour être conduite par le boisseau en (30 ou 32) pour entrer en (15 ou 13) du premier secteur circulaire contiguë, puis parcourir tout le réseau choisi du disque considéré jusqu'aux entrées (33 ou 35) et aux sorties (34 ou 36) dudit secteur circulaire et entrer dans le connecteur de liaison adjacent du disque suivant.

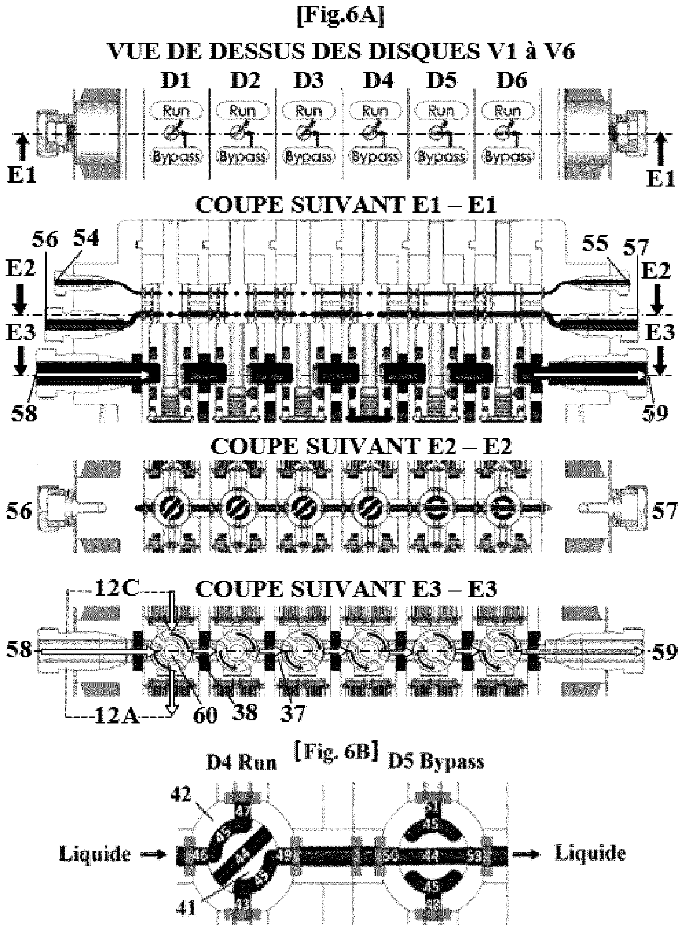

En position Bypass, la phase mobile qui avait précédemment rempli le réseau de cellules concerné y est emprisonnée. La phase mobile entrant en (29 ou 31) du dudit connecteur de liaison est dirigée directement par le boisseau vers la sortie (34 ou 36) dudit connecteur de liaison adjacent du connecteur de liaison suivant de l'empilement. Ce mode permet à l'utilisateur, en tournant le boisseau (41) d'un quart de tour dans un sens ou dans l'autre à l'aide d'un tournevis inséré dans la fente (43), d'ajuster le nombre des cellules actives du rotor par pas du nombre de cellules contenues dans un disque. On montre plus en détail le fonctionnement de ce mode majeur de l'invention avec la présentation des figures 6A et 6B suivantes.

**La** **figures 6A** présente une vue de dessus du rotor selon l'invention montrant les vannes de sélection de disques puis en trois coupe (E1, E2 et E3) comme exemple non limitatif d'un rotor selon l'invention, formé seulement de 6 disques (D1, D2, D3, D4, D5 et D6), pour ne pas surcharger la figure.

A titre d'exemple non limitatif, le présent disque comporte deux réseaux concentriques indépendants de 80 cellules, chacun des deux réseaux étant constitué de cellules de volumes différents et de canaux de liaison dont les sections respectives sont adaptées aux débits nécessaires auxdites cellules. A titre indicatif et non limitatif les petites cellules ont dans le présent exemple, un volume V et les autres cellules ont un volume 8V.

Les connecteurs de liaison (6), qu'ils soient de configuration fixe (A6 fig. 4), ou associé à une vanne de commutation (B6 Fig. 5), sont directement interchangeables.

La coupe (E1) est effectuée selon un plan défini par une génératrice du rotor coupant les axes des boisseaux (41) et l'axe du rotor.

La coupe (E2) est effectuée selon un plan perpendiculaire à la coupe (E1), passant par l'axe des canaux traversant les vannes de commutation reliée hydrauliquement aux entrées et sorties (56 & 57) et/ou (54 & 57) selon le réseau utilisé.

La coupe (E3) est effectuée selon un plan perpendiculaire à la coupe (E1) et passant par l'axe des entrées et sorties (58 et 59) du fluide de contrôle de la température ou fluide de thermostatisation.

**La coupe E1** présente une vue d'ensemble comportant les vannes à boisseau à double canaux adaptés aux deux réseaux de cellules de volumes différents (V et 8V) du présent exemple de réalisation. Pour son utilisation, on sélectionne le réseau correspondant au volume des cellules choisies, en connectant par exemple l'arrivée de la phase mobile en mode descendant à l'entrées (56) la sortie (57) étant alors celle du rotor qui sera connectée à un détecteur et à un collecteur de fractions, par exemple. Il est recommandé de connecter un bouchon en (54) et (55), pour éviter que la phase se trouvant dans le réseau de cellules correspondant ne s'échappe pas, afin de ne pas risquer un déséquilibre dynamique du rotor en rotation. Cette coupe (E1) montre également les entrée et sortie (58 et 59) destinées à la circulation d'un liquide de contrôle de la température ou fluide de thermostatisation du rotor.

**La coupe E2** montre plus précisément le fonctionnement hydraulique des vannes "RUN"-"BYPASS" dont on montre, à plus grande échelle en figure (6B) celles installées sur les disques (D4 et D5). On observe que les boisseaux (41) des disques du rotor sont arbitrairement positionnés en "RUN" pour les disques (D1, D2, D3, et D4) et en "BYPASS" pour les disques (D5 et D6), à titre d'exemple illustrant le fonctionnement selon l'invention dans lequel on souhaite n'utiliser que 4 disques de cellules actives, soit 320 cellules actives sur les 480 du présent rotor.

**La coupe E3** montre le plan parallèle à la coupe E2 et passant par l'axe des raccords (58-59). Le liquide de contrôle de la température ou fluide de thermostatisation entre par exemple par le raccord (58), puis arrive à l'entrée (37) du premier connecteur de liaison (A6 ou B6). L'aiguillage (60) le dirige dans le sens des flèches vers le canal de contrôle de la température ou fluide de thermostatisation (12A) du secteur circulaire contigu. Après que le liquide de contrôle de la température ou fluide de thermostatisation ait parcouru tous les conduits (12A, 12B & 12C) des secteurs circulaires du disque, arrive de (12C) pour être dirigé en (38) de l'aiguillage (60) du connecteur de liaison et passe directement de la sortie (38) à l'entrée (37) du connecteur de liaison adjacent du disque suivant et ce jusqu'à ce qu'il arrive à la sortie (59) du rotor.

**La** **figure 6B** montre en détail le trajet de la phase mobile provenant de la sortie (34 ou 36) du disque (D3). Elle entre en (46) de la vanne du disque (D4) positionnée en "RUN", puis est dirigée par (45) en (47), entrée du réseau de cellule dudit disque (D4), puis en ressort en (43). Elle parcourt le canal (45), arrives en (49), traverse la liaison (49/50), puis le canal du boisseau (44) de la vanne (D5) en position "BYPASS", pour en sortir directement en (53) ladite sortie étant connectée à l'entrée (29 ou 31) du connecteur de liaison du disque adjacent (D6), lequel étant également en position "BYPASS" la conduit directement à la sortie (55 ou 57) du rotor.

Dans cet exemple, la phase mobile parcourt donc 320 cellules du rotor qui en comporte 480. On peut réaliser des rotors avec beaucoup plus de cellules pour élargir le champ d'applications. On comprend par cet exemple que le nombre de cellules utilisées d'un tel rotor peut être modifié par pas d'un nombre de cellules correspondant au nombre des cellules contenu dans chaque disque, en tournant d'un quart de tour les boisseaux (41) des vannes (42) et donc permettant d'opérer avec 80, 160, 240, 320 ou 400 cellules d'un tel rotor, en fonction des besoins des séparations à effectuer. Si l'on connecte la phase mobile légère à l'entrée (57), le parcours des réseaux de cellules reste le même mais en mode ascendant.

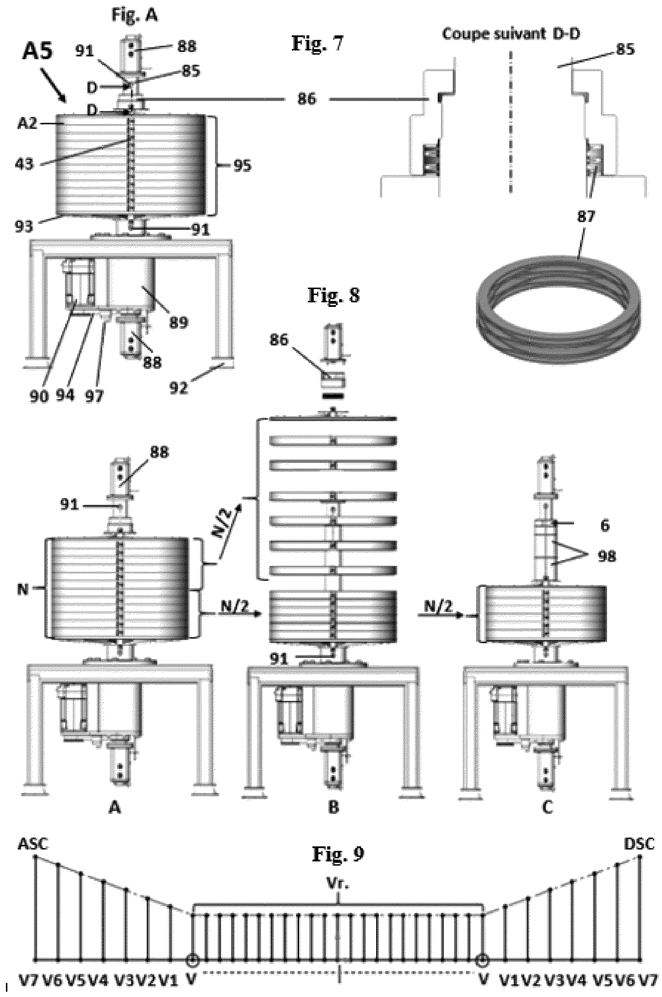

**La** **figure 7** présente un mode de réalisation de l'invention dans lequel le rotor est formé d'un empilement (95) de disques (A2), et dans lequel l'arbre de rotation (85) est à une extrémité tenue en position verticale par un ensemble adapté et disposé dans le cylindre (89). Un moteur (90) muni d'une poulie crantée, entraine en rotation ledit rotor dont l'axe est également muni d'une poulie crantée, les deux poulies crantées étant mécaniquement couplées par une courroie crantée (94) maintenue en tension par un tendeur excentrique (97). Chaque extrémité de l'arbre (85) est équipée d'un joint tournant hydraulique (88) qui permet à la phase mobile et au liquide de contrôle de la température ou fluide de thermostatisation d'entrer et de sortir du rotor sans volume de rétention.

Ces joints tournants doivent être adaptés aux pressions et aux vitesses de rotation mises en jeu et doivent être d'un accès aisé afin de simplifier les opérations de maintenances, nettoyage, changements de joints, SAV, etc.

Un écrou (86) muni d'un alésage pour recevoir un ressort (87), se visse sur l'arbre (85) du rotor afin que ledit ressort (87) assure une pression permanente suffisante pour garantir l'étanchéité de tous les joints des disques de l'empilage constituant le rotor et pour que l'assemblage soit mécaniquement homogène et stable. Le bâti portant cet ensemble mécanique est fixé à l'appareil par des amortisseurs (92) prévus à cet effet, auxquels on ajoute des fixations de sécurité et un blocage mécanique pour les transports, répondant aux normes en vigueur.

**La** **figure 8** présente de façon détaillée un exemple de mode non limitatif de réalisation selon l'invention d'un rotor, par exemple de production, constitué d'un empilement ou superposition de (12) disques (A2), illustrant la facilité avec laquelle il est possible de modifier le nombre des disques dudit rotor, et qui s'avère particulièrement applicable sur les appareils de production. Ces derniers travaillant fréquemment à long terme sur une même application ne nécessitent pas forcément d'être optimisés fréquemment. Cependant, le mode de réalisation selon l'invention comportant une vanne "RUN-BYPASS" installée sur chaque disque du rotor peut s'avérer très efficace si l'objectif de l'appareil considéré est d'effectuer des opérations diverses à la demande, en synthèse, purification, extraction, etc..., l'utilisateur pouvant rapidement optimiser l'appareil au plus proche de l'optimum, à l'aide desdites vannes (42) pour chacune de ses diverses applications.

Pour le calcul et la construction d'un appareil de production destiné à effectuer à long terme une application donnée, les calculs et expérimentations de changement d'échelle, issus de résultats de mesures effectuées sur des appareils de laboratoire, de préférence équipés desdites vannes "RUN-BYPASS" sur chaque disque selon l'invention, devraient faire gagner du temps et de la précision. Cependant, les mesures pouvant être quelque peu entachées d'erreurs, le rotor industriel construit sur ces bases peut ne pas être exactement à son optimum, défaut qui peut être aisément corrigé grâce à la souplesse technologique de l'invention, de par le fait qu'il est possible d'ajouter ou d'enlever (un) ou plusieurs disque(s) permettant d'en optimiser les performances en conditions réelles et en ajustant le nombre de cellules nécessaire, opération simplifiée grâce la construction desdits disque par l'assemblage de secteurs circulaires, lesdits secteurs circulaires pouvant comporter plus ou moins de cellules à la demande.

**La vue A** de la figure (8) présente ledit rotor (A5) constitué de douze disques selon l'invention et qui ont tous été préalablement et indépendamment équilibrés. On souhaite, pour une raison quelconque, enlever un ou plusieurs disques, en l'occurrence (6). Pour ce faire, on démonte le joint tournant supérieur (88) puis on dévisse l'écrou (86) et les tubes de connexion (91) et l'on enlève le ressort (87). On voit sur les figures (8A et 8B) que l'on peut retirer la flasque (93) puis les 6 disques un par un en (8B), pour arriver en (8C) dans laquelle on voit le rotor constitué de la flasque (93) posée sur l'empilement constitué alors de six disques, puis les entretoises (98) glissantes sur l'arbre, dont les longueurs seront préférentiellement en progression binaire de sorte à en limiter leur nombre, la plus petite entretoise ayant une hauteur égale à l'épaisseur d'un disque, puis l'écrou (86) et le joint tournant (88).

Ce mode de réalisation présenté avec un axe vertical n'exclut pas un assemblage effectué avec un axe de rotation horizontal ou articulé permettant de déplacer angulairement la partie supportant le rotor. L'homme de l'art saura utiliser divers moyens connus en mécanique traditionnelle pour réaliser un tel montage.

**La figure 9** montre un exemple non limitatif d'un autre mode de réalisation de l'invention permettant d'augmenter la quantité injectable d'échantillon à traiter avec un rotor en fonctionnement CPC, constitué d'un ensemble de cellules identiques de même volumes (V).

Précédant l'entrée dudit rotor, lorsque l'on veut opérer en mode ascendant (ASC), on ajoute un réseau de cellules dont les volumes ont des valeurs progressives et, pour simplifier la description, la première (V7) a un volume (n) fois supérieure au volume (V) des cellules dudit rotor. Entre (V7) et la première cellule (V) du réseau de cellules identiques, on intercale un certain nombre de cellules (V6, V5, ....V1), selon une loi de variation des volumes à déterminer. Sur ladite figure, pour la simplifier, cette variation est présentée de façon non limitative selon une fonction linéaire. Il en est de même lorsque l'on opère en mode descendant (DSC) dans lequel, les mêmes valeurs des volumes des cellules sont représentées à titre d'exemple.

Il est pertinent d'utiliser des disques équipés des vannes (42) selon l'invention permettant de connecter ou non, tout ou parties des disques du rotor comportant les réseaux de cellules de différents volumes pour en ajuster le nombre en fonction des besoins de chaque application.

Le rotor selon l'invention est utilisé dans des opérations de chromatographie de partage centrifuge (CPC) permettant la séparation d'un composé contenu dans une solution formée de plusieurs composants. La séparation de l'échantillon est basée sur les coefficients de partage spécifiques à chacun des composants de l'échantillon entre les phases mobile et stationnaire. Le coefficient de partage détermine l'affinité de chaque molécule dans les phases mobile et stationnaire et donc la vitesse à laquelle chaque molécule se déplace dans le système. À la fin du processus de purification, les collecteurs de fractions automatisés conservent toutes les fractions sélectionnées en fonction des paramètres du programme.

Le rotor selon l'invention peut être utilisé non seulement dans des opérations de séparation, mais encore pour des opérations de réaction entre composants, donc agir comme réacteur chimique et/ou biochimique intensifié du fait de l'excellent mélange se produisant dans chacune des cellules. L'avantage du système est d'obtenir un comportement de réacteur piston, qui est reconnu pour donner les meilleures performances, en considérant ledit rotor universel comme une succession de réacteurs parfaitement agités, constitués par les cellules. Les réactions peuvent être réalisées en monophasique ou en diphasique, ce qui est d'autant plus pertinent lorsque les réactifs et le produit sont dans des phases différentes.

Cette invention est en rupture avec les procédés discontinus traditionnels, la cuve agitée à double-enveloppe, qui est l'outil le plus utilisé avec plus de 50% des unités de production chimique dans le monde. L'ingénierie des réacteurs comporte deux éléments clés : la cinétique des réactions et la conception des réacteurs. La conception des réacteurs doit être pensée pour que la réaction se déroule à sa vitesse intrinsèque, c'est-à-dire s'il y a un mélange et un transfert de masse parfait dans le réacteur. Il arrive souvent que dans les grands réacteurs à cuve d'agitation, la réaction ne se déroule pas à sa vitesse intrinsèque, car elle est limitée par le mélange dans la cuve, c'est-à-dire que les réactifs ne sont pas parfaitement mélangés. Dans ce cas, on dit qu'elle est "limitée par le mélange". Le rôle de l'intensification du processus est de réduire ou de supprimer ces limitations afin que la réaction puisse atteindre son rythme intrinsèque. Ainsi, le but est de s'assurer que les taux de mélange et de transfert de chaleur/masse seront relativement rapides par rapport à la cinétique fondamentale du processus. Une accélération élevée pouvant être obtenue aussi longtemps que nécessaire en fonctionnant dans un tel système rotatif. Transposer les synthèses chimiques dans des réacteurs dans lesquels les phases ont un écoulement de type piston permet alors de minimiser les volumes réactionnels en jeu (sécurité des installations et des opérateurs), d'intensifier les échanges de matière (mélange, réaction, séparation), d'asservir et de contrôler la température avec une bonne précision et d'y ajouter des systèmes d'alerte en cas de dépassement. Parmi les exemples, on peut citer la réduction du benzal-aldéhyde en alcool benzylique par catalyse homogène au ruthénium, ou la réaction d'estérification diphasique de l'acide oléique en oléate d'éthyle par une lipase (*Candida Antartica*).

L'extraction liquide/liquide est une opération de base dans le domaine du génie des procédés. Elle consiste à faire passer un soluté (la molécule d'intérêt) d'une phase dite "d'alimentation" vers une phase dite "extrait". Les deux phases sont immiscibles ou partiellement miscibles. De nombreux exemples existent dans l'industrie, par exemple la production des antibiotiques avec un cycle d'extraction acido-basique.

## Revendications

1. Rotor universel pour opérations nécessitant de soumettre des fluides à des accélérations centrifuges impliquant la circulation de fluides monophasiques ou polyphasiques, en vue de traitements consistant en purifications, extractions, séparations, chromatographie de partage centrifuge (CPC), extractions liquide-liquide, réactions chimiques et/ou biochimiques, **caractérisé en ce que** :
- le rotor est formé d'un disque ou de plusieurs disques empilés les uns sur les autres,
- chacun desdits disques est constitué d'un support (7) dans lequel est inséré une couronne (A1) constituée de l'assemblage d'un ou de plusieurs secteurs circulaires (A3),
- dans le cas d'un seul secteur circulaire (A3), un espace est aménagé entre les deux extrémités de l'unique secteur circulaire
dans le cas de plusieurs secteurs circulaires l'espace est aménagé entre les extrémités de deux secteurs circulaires contigus.
- un connecteur de liaison (A6 ou B6) est inséré dans ledit ou lesdits espaces,
- le connecteur de liaison dispose de moyens de dérivation consistant en des canaux nécessaires pour que la phase liquide entrant par des entrées (31 ou 29) dans ledit connecteur de liaison (A6 ou B6) soit guidée pour parcourir un réseau de cellules (26 ou 27) jusqu'à des sorties (36 ou 34) dudit connecteur de liaison, lesquelles sorties sont en contact direct avec les entrées (A6 ou B6) du connecteur de liaison du disque suivant et ainsi de suite, jusqu'à la sortie du dernier disque connecté à la sortie (55 ou 57) dudit rotor.

2. Rotor selon la revendication 1, formé d'un secteur circulaire unique comportant un réseau de cellules successives et interconnectées entre elles par des canaux (18) et (19) disposés dans un plan plus ou moins médiant de son épaisseur, **caractérisé en ce qu'**il y a au moins un intervalle entre ses deux extrémités pour y disposer de manière étanche un connecteur de liaison (A6 ou B6), ledit connecteur de liaison comprenant au moins une entrée (31) et au moins une sortie (32) destinées à permettre respectivement l'entrée d'un mélange liquide dans des réseaux (13) de cellules et la sortie dudit mélange des canaux (14) des cellules (27).

3. Rotor selon la revendication 1 ou 2, **caractérisé en ce que** les secteurs circulaires sont réalisés à partir de demi-secteurs circulaires (10) et demi-secteurs circulaires (11), dont chacun est la pièce miroir de l'autre, tous comportant sur leur plan miroir, les demi-cellules (26A, 26B) & (27A & 27B) et demi-canaux (18A & 18B) & (19A & 19B), les deux demi-secteurs étant assemblées de façon étanche, face contre face, pour devenir un secteur circulaire (A3).

4. Rotor selon une quelconque des revendications 1 à 3, dans lequel chaque secteur circulaire (A3) d'une couronne (A1), est formé d'un empilement de superpositions chacun comprenant des demi-cellules (27A, 27B) dont les angles (20) sont remplacés par des congés formant des arrondis.

5. Rotor selon une quelconque des revendications 1 à 4, **caractérisé en ce que** les secteurs circulaires sont réalisés en une seule pièce, par construction additive.

6. Rotor selon l'une quelconque des revendications 1 à 5, **caractérisé en ce que** le secteur circulaire unique (A3) comporte dans son épaisseur un ou plusieurs conduits circulaires de section plus ou moins rectangulaire, en l'occurrence trois, (12A, 12B et 12C), délimités par des parois concentriques (12F, 12AB, 12BC et 12E) et disposés de telle sorte que les rayons moyens de chacun desdits conduits circulaires soient sensiblement disposés respectivement sur les même rayons moyens que ceux des réseaux circulaires desdites cellules correspondantes, afin d'y faire circuler un fluide de contrôle de la température ou fluide de thermostatisation de façon la plus identique pour chacun desdits réseaux de cellules.

7. Rotor selon la revendication 7, **caractérisé en ce que** le connecteur de liaison (A6 ou B6) comporte les dérivations nécessaires pour que le fluide de contrôle de la température ou fluide de thermostatisation entrant par une entrée (37) parcourt tous les conduits (12A) à (12C) connectés en séries de chacun des secteurs circulaires constituant la couronne considérée, puis, guidé par ledit connecteur de liaison, passe au connecteur de liaison du disque contigu suivant de l'empilement et ainsi de suite jusqu'à la sortie du rotor (58 ou 59).

8. Rotor selon une quelconque des revendications 1 à dans lequel ledit connecteur de liaison (6) comporte également une entrée (37) et une sortie (38) permettant l'entrée et la sortie d'un fluide de contrôle de la température ou fluide de thermostatisation pour qu'il parcourt le ou les conduits de contrôle de la température ou du fluide de thermostatisation.

9. Rotor selon l'une quelconque des revendications 1 à **caractérisé en ce que** les cellules (26 & 27) ont des parois munies d'ailettes (12A, 12B et 12C).

10. Rotor selon l'une quelconque des revendications 1 à 9, dans lequel le connecteur de liaison (A6) comprend au moins une entrée (31) et au moins une sortie (36) destinées à permettre respectivement l'entrée d'un mélange liquide dans les réseaux de cellules et la sortie dudit mélange des réseaux de cellules, de telle sorte qu'entre la sortie et l'entrée, la phase liquide parcourt toutes les cellules et canaux du disque considéré.

11. Rotor selon une quelconque des revendications 1 à 10, **caractérisé en ce que** lorsque le connecteur de liaison est le connecteur (B6) est dans ce cas ajouté une vanne à une ou plusieurs voies (42) comportant les positions, "ON" et "BYPASS", permettant de choisir la position telle qu'en position "ON" de ladite vanne (42) une phase liquide entrant par l'entrée (31), soit dirigée vers la sortie (32) de ladite vanne puis vers l'entrée (13) du secteur circulaire contigu pour parcourir tout le réseau de cellules du disque et arriver à la sortie (14) du dernier secteur circulaire puis à l'entrée (35) puis à la sortie (36) dudit connecteur de liaison, pour entrer par l'entrée (31) du connecteur de liaison du disque contigu suivant mais, si le boisseau de cette vanne (42) est en position "BYPASS", la phase liquide entrant par l'entrée (31) est dirigée directement vers la sortie (36) sans parcourir les cellules du disque concerné, celui-ci se trouvant court-circuité, ce qui permet à l'utilisateur d'ajuster le nombre de cellules à chacune de ses diverses applications par pas du nombre de cellules contenu dans un disque.

12. Rotor selon une quelconque des revendications 1 à 11, **caractérisé en ce que**, les "n" premières cellules dudit rotor ont des volumes décroissants selon une fonction à déterminer allant de (V7) à (V) avec (V7>V), V étant le volume constant de la majeure partie des cellules dudit rotor, ce qui permet d' augmenter la productivité dudit rotor, en mode CPC, en mode ascendant.

13. Utilisation du rotor universel selon l'une quelconque des revendications 1 à 12, sur des appareils permettant de faire circuler un ou plusieurs liquides nécessitant d'être soumis à des accélérations centrifuges stables et/ou variables, à des pressions pouvant être élevées et à des températures précises et/ou variables avec de courtes constantes de temps, ces appareils pouvant être utilisés comme réacteurs chimiques et/ou biochimiques et/ou pour des extractions, séparations et purifications en chromatographie de partage centrifuge (CPC), du laboratoire à l'échelle industrielle et à tout autre appareil et application nécessitant de faire circuler un ou plusieurs fluides, tels solvants organiques ou non, liquides ioniques, CO2 en phase liquide ou supercritique et appareils correspondants.

14. Utilisation du rotor universel selon une quelconque des revendications 1 à 12, dans des opérations nécessitant de soumettre des fluides à des accélérations centrifuges dans le cadre d'opérations nécessitant la circulation de fluides monophasiques ou polyphasiques, en vue de purifications, extractions, séparations, chromatographie de partage centrifuge (CPC), extractions liquide-liquide.

15. Utilisation du rotor universel selon une quelconque des revendications 1 à 12, dans des opérations nécessitant de soumettre des fluides à des accélérations centrifuges dans le cadre d'opérations nécessitant la circulation de fluides monophasiques ou polyphasiques, en vue de réactions chimiques et biochimiques.

## Patentansprüche

1. Universalrotor für Vorgänge, die erfordern, dass Fluide Zentrifugalbeschleunigungen unterworfen werden, die die Zirkulation von einphasigen oder mehrphasigen Fluiden bedingen, für Behandlungen, die aus Reinigungen, Extraktion, Abscheidungen, Zentrifugal-Verteilungschromatographie (CPC), Flüssigkeits-Flüssigkeits-Extraktionen, chemischen und/oder biochemischen Reaktionen bestehen, **dadurch gekennzeichnet, dass**:
- der Rotor aus einer Scheibe oder mehreren Scheiben, die aufeinander gestapelt sind, gebildet ist,
- jede der Scheiben aus einer Stütze (7) besteht, in der ein Kranz (A1) eingesetzt ist, der aus der Zusammenfügung einer oder mehrerer Kreissektoren (A3) gebildet ist,
- im Fall eines einzigen Kreissektors (A3) ein Raum zwischen den beiden Enden des einzigen Kreissektors eingerichtet ist,
in dem Fall mehrerer Kreissektoren der Raum zwischen den Enden zweier angrenzender Kreissektoren eingerichtet ist,
- ein Verbindungsstecker (A6 oder B6) in den oder die Räume eingesetzt ist,
- der Verbindungsstecker über Abzweigungsmittel verfügt, die aus Kanälen bestehen, die erforderlich sind, damit die flüssige Phase, die zwischen den Eingängen (31 oder 29) in den Verbindungsstecker (A6 oder B6) eintritt, geführt wird, um ein Netz von Zellen (26 oder 27) bis zu Ausgängen (36 oder 34) des Verbindungssteckers zu durchlaufen, wobei die Ausgänge in direktem Kontakt mit den Eingängen (A6 oder B6) des Verbindungssteckers der darauffolgenden Scheibe stehen, und so fort, bis zu dem Ausgang der letzten Scheibe, die mit dem Ausgang (55 oder 57) des Rotors verbunden ist.

2. Rotor nach Anspruch 1, der aus einem einzigen Kreissektor gebildet ist, der ein Netz aufeinanderfolgender, miteinander durch Kanäle (18) und (19) verbundener Zellen umfasst, die in einer mehr oder weniger mittleren Ebene seiner Dicke angeordnet sind, **dadurch gekennzeichnet, dass** mindestens ein Abstand zwischen seinen beiden Enden besteht, um dort auf dichte Weise einen Verbindungsstecker (A6 oder B6) anzuordnen, wobei der Verbindungsstecker mindestens einen Eingang (31) und mindestens einen Ausgang (32) umfasst, die dazu bestimmt sind, den Eintritt einer flüssigen Mischung in Netze (13) von Zellen bzw. den Ausgang der Mischung aus den Kanälen (14) dieser Zellen (27) zu erlauben.

3. Rotor nach Anspruch 1 oder 2, **dadurch gekennzeichnet, dass** die Kreissektoren ausgehend von Halbkreissektoren (10) und Halbkreissektoren (11) hergestellt sind, von welchen jeder das Spiegelbild des anderen ist, die alle auf ihrer Spiegelebene Halbzellen (26A, 26B) und (27A und 27B) und Halbkanäle (18A und 18B) und (19A und 19B) umfassen, wobei die beiden Halbsektoren dicht, Fläche gegen Fläche, zusammengefügt sind, um einen Kreissektor (A3) zu werden.

4. Rotor nach einem der Ansprüche 1 bis 3, wobei jeder Kreissektor (A3) eines Kranzes (A1) aus einer Stapelung von Überlagerungen gebildet ist, die jeweils Halbzellen (27A, 27B) umfassen, deren Winkel (20) durch Hohlkehlen, die Rundungen bilden, ersetzt sind.

5. Rotor nach einem der Ansprüche 1 bis 4, **dadurch gekennzeichnet, dass** die Kreissektoren aus einem einzigen Stück durch additive Konstruktion hergestellt sind.

6. Rotor nach einem der Ansprüche 1 bis 5, **dadurch gekennzeichnet, dass** der einzige Kreissektor (A3) in seiner Dicke eine oder mehrere kreisförmige Leitungen mit mehr oder minder rechteckigem Querschnitt, im konkreten Fall drei, (12A, 12B und 12C), umfasst, die durch konzentrische Wände (12F, 12AB, 12BC und 12E) begrenzt und derart angeordnet sind, dass die mittleren Radien jeder der kreisförmigen Leitungen im Wesentlichen jeweils auf denselben mittleren Radien wie diejenigen der kreisförmigen Netze der entsprechenden Zellen angeordnet sind, um dort ein Kontrollfluid der Temperatur oder Thermostatisierungsfluid in möglichst identischer Weise für jedes der Netze von Zellen zirkulieren zu lassen.

7. Rotor nach einem der Ansprüche 1 bis 6, wobei der Steckverbinder (6) auch einen Eingang (37) und einen Ausgang (38) umfasst, die den Eintritt und den Austritt eines Kontrollfluids der Temperatur oder Thermostatisierungsfluids erlauben, damit es die Kontrollleitung(en) der Temperatur oder des Thermostatisierungsfluids durchläuft.

8. Motor nach Anspruch 7, **dadurch gekennzeichnet, dass** der Steckverbinder (A6 oder B6) die erforderlichen Abzweigungen umfasst, damit das Kontrollfluid der Temperatur oder das Thermostatisierungsfluid, das durch einen Eingang (37) eintritt, alle Leitungen (12A) bis (12C) durchläuft, die in Reihe jedes der Kreissektoren verbunden sind, die den betreffenden Kranz bilden, dann, geführt von dem Verbindungsstecker, zu dem Verbindungsstecker der darauffolgenden angrenzenden Scheibe der Stapelung übergeht und so fort, bis zu dem Ausgang des Rotors (58 oder 59).

9. Rotor nach einem der Ansprüche 1 bis 8, **dadurch gekennzeichnet, dass** die Zellen (26 und 27) Wände aufweisen, die mit Rippen (12A, 12B und 12C) versehen sind.

10. Rotor nach einem der Ansprüche 1 bis 9, wobei der Steckverbinder (A6) mindestens einen Eingang (31) und mindestens einen Ausgang (36) umfasst, die dazu bestimmt sind, jeweils den Eintritt einer flüssigen Mischung in die Netze von Zellen und den Austritt der flüssigen Mischung aus den Netzen von Zellen derart zu erlauben, dass zwischen dem Ausgang und dem Eingang die flüssige Phase alle Zellen und Kanäle der betreffenden Scheibe durchläuft.

11. Rotor nach einem der Ansprüche 1 bis 10, **dadurch gekennzeichnet, dass**, wenn der Verbindungsstecker der Steckverbinder (B6) ist, in diesem Fall ein Schütz mit einem oder mehreren Wegen (42) hinzugefügt wird, der die Positionen "EIN" und "BYPASS" umfasst, die es erlauben, die Positionen derart auszuwählen, dass in Position "EIN" des Schützes (42) eine flüssige Phase, die durch den Eingang (31) eintritt, zu dem Ausgang (32) des Schützes und dann zu dem Eingang (13) des angrenzenden Kreissektors gelenkt wird, um das gesamte Netz von Zellen der Scheibe zu durchlaufen und an dem Ausgang (14) des letzten Kreissektors anzukommen, dann an dem Eingang (35) und dann an dem Ausgang (36) des Verbindungssteckers, um durch den Eingang (31) des Steckverbinders der darauffolgenden angrenzenden Scheibe einzutreten, aber, wenn der Kugelhahn dieses Schützes (42) in "BYPASS"-Position ist, die flüssige Phase, die durch den Eingang (31) eintritt, direkt zu dem Ausgang (36) gelenkt wird, ohne die Zellen der betreffenden Scheibe zu durchlaufen, wobei diese umgangen wird, was es dem Benutzer erlaubt, die Anzahl von Zellen an jede seiner verschiedenen Anwendungen schrittweise gemäß der Anzahl von Zellen, die in einer Scheibe enthalten sind, einzustellen.

12. Rotor nach einem der Ansprüche 1 bis 11, **dadurch gekennzeichnet, dass** die "n" ersten Zellen des Rotors abnehmende Volumina gemäß einer zu bestimmenden Funktion aufweisen, die von (V7) zu (V) mit (V7 > V) gehen, wobei V das konstante Volumen des Großteils der Zellen des Rotors ist, was es erlaubt, die Produktivität des Rotors im CPC-Modus in aufsteigendem Modus zu erhöhen.

13. Verwendung des Universalrotors nach einem der Ansprüche 1 bis 12 an Einrichtungen, die es erlauben, eine oder mehrere Flüssigkeiten zirkulieren zu lassen, die beständigen und/oder variablen zentrifugalen Beschleunigungen bei Drücken, die hoch sein können, und bei genauen und/oder variablen Temperaturen mit kurzen Zeitkonstanten unterworfen werden müssen, wobei diese Einrichtungen als chemische und/oder biochemische Reaktoren und/oder für Extraktionen, Abscheidungen und Reinigungen und Zentrifugal-Verteilungschromatographie (CPC), im Labor und bis zum industriellen Maßstab und an jeder anderen Einrichtung und Anwendung verwendet werden können, die erfordern, dass ein oder mehrere Fluide, wie organische oder nichtorganische Lösungsmittel, ionische Flüssigkeiten, CO2 in flüssiger oder superkritische Phase und entsprechenden Einrichtungen zirkulieren.

14. Verwendung des Universalrotors nach einem der Ansprüche 1 bis 12, bei Vorgängen, die erfordern, dass Fluide Zentrifugalbeschleunigungen im Rahmen von Vorgängen unterworfen werden, die die Zirkulation einphasiger oder mehrphasiger Fluide für Reinigungen, Extraktionen, Abscheidungen, Zentrifugal-Verteilungschromatographie (CPC), Flüssigkeits-Flüssigkeits-Extraktionen erfordern.

15. Verwendung des Universalrotors nach einem der Ansprüche 1 bis 12, bei Vorgängen, die erfordern, dass Fluide Zentrifugalbeschleunigungen im Rahmen von Vorgängen unterworfen werden, die die Zirkulation einphasiger oder mehrphasiger Fluide für chemische oder biochemische Reaktionen erfordern.

## Claims

1. Universal rotor for operations requiring the submission of fluids to centrifugal accelerations involving the circulation of single-phase or multi-phase fluids, for treatments consisting of purifications, extractions, separations, centrifugal partition chromatography (CPC), liquid-liquid extractions, chemical and/or biochemical reactions, **characterized in that**:
- the rotor is formed of a disc or several discs stacked on top of each other,
- each of the said discs consists of a support (7) in which a crown (A1) is inserted, consisting of the assembly of one or more circular sectors (A3),
- in the case of a single circular sector (A3), a space is arranged between the two ends of the single circular sector
in the case of several circular sectors, the space is arranged between the ends of two contiguous circular sectors.
- a connecting connector (A6 or B6) is inserted in the said space or spaces,
- the connecting connector has the means of derivation consisting of channels necessary for the liquid phase entering through the inlets (31 or 29) in the said connecting connector (A6 or B6) to be guided to travel through the said network of cells (26 or 27) to outlets (36 or 34) of the said connecting connector, which outlets are in direct contact with the inlets (A6 or B6) of the connecting connector of the next disc and so on, until the outlet of the last disc connected to the outlet (55 or 57) of the said rotor.

2. Rotor according to claim 1, formed of a single circular sector comprising a network of successive cells interconnected by channels (18) and (19) arranged in a plane more or less median of its thickness, **characterized in that** there is at least one interval between its two ends to arrange a connecting connector (A6 or B6) in a sealed manner, said connecting connector comprising at least one inlet (31) and at least one outlet (32) intended to allow respectively the entry of a liquid mixture into the networks (13) of cells and the exit of said mixture of the channels (14) of the cells (27).

3. Rotor according to claim 1 or 2, **characterized in that** the circular sectors are made from circular half-sectors (10) and circular half-sectors (11), each of which is the mirror part of the other, all comprising on their mirror plane, the half-cells (26A, 26B) & (27A & 27B) and half-channels (18A & 18B) & (19A & 19B), the two half-sectors being assembled in a sealed manner, face to face, to become a circular sector (A3).

4. Rotor according to claims 1 or 3, in which each circular sector (A3) of a crown (A1), is formed of a stack of superimpositions each comprising half-cells (27A, 27B) whose angles (20) are replaced by fillets forming rounded edges.

5. Rotor according to one of claims 1 to 4, **characterized in that** the circular sectors are made in one piece, by additive construction.

6. Rotor according to one of claims 1 to 5, **characterized in that** the single circular sector (A3) comprises in its thickness one or more circular conduits of more or less rectangular section, in this case three, (12A, 12B and 12C), delimited by concentric walls (12F, 12AB, 12BC and 12E) and arranged in such a way that the average radii of each of the said circular conduits are substantially arranged respectively on the same average radii as those of the circular networks of the said corresponding cells, in order to circulate a temperature control fluid or thermostatization fluid in the most identical way possible for each of the said cell networks.

7. Rotor according to any one of claims 1 to 6, in which the said connecting connector (6) also comprises an inlet (37) and an outlet (38) allowing the entry and exit of a temperature control fluid or thermostatization fluid so that it travels through the temperature control conduit(s) or the thermostatization fluid.

8. Rotor according to claim 7, **characterized in that** the connecting connector (A6 or B6) comprises the necessary derivations so that the temperature control fluid or thermostatization fluid entering (37) passes through all the ducts (12A) to (12C) connected in series of each of the circular sectors constituting the ring in question, then, guided by the said connecting connector, passes to the connecting connector of the next contiguous disc of the stack and so on until the rotor outlet (58 or 59).

9. Rotor according to any one of claims 1 to 8, **characterized in that** the cells (26 & 27) have walls provided with fins (12A, 12B and 12C).

10. Rotor according to any one of claims 1 to 9, in which the connecting connector (A6) comprises at least one inlet (31) and at least one outlet (36) intended to allow respectively the entry of a liquid mixture in the cell networks and the exit of the said mixture of the cell networks, so that between the exit and the entry, the liquid phase travels through all the cells and channels of the disc in question.

11. Rotor according to any one of claims 1 to 10, **characterized in that** when the connecting connector is the connector (B6) in this case a valve with one or more channels (42) comprising the positions, "ON" and "BYPASS", allowing to choose the position such that in the "ON" position of the said valve (42) a liquid phase entering through the inlet (31), is directed towards the outlet (32) of the said valve then towards the inlet (13) of the contiguous circular sector to traverse the entire network of cells of the disc and arrive at the outlet (14) of the last circular sector then at the inlet (35) then at the outlet (36) of the said connecting connector, to enter through the inlet (31) of the connecting the next contiguous disc but, if the plug of this valve (42) is in the "BYPASS" position, the liquid phase entering through the inlet (31) is directed directly towards the outlet (36) without passing through the cells of the disc concerned, the latter being short-circuited, which allows the user to adjust the number of cells to each of its various applications by steps of the number of cells contained in a disc.

12. Rotor according to any one of claims 1 to 11, **characterized in that**, the "n" first cells of the said rotor have decreasing volumes according to a function to be determined ranging from (V7) to (V) with (V7>V), V being the constant volume of the major part of the cells of the said rotor, which makes it possible to increase the productivity of the said rotor, in CPC mode, in ascending mode.

13. Use of the universal rotor according to any one of claims 1 to 12, on devices allowing to circulate one or more liquids needing to be subjected to stable and/or variable centrifugal accelerations, at pressures which can be high and at precise and/or variable temperatures with short time constants, devices which can be used as a chemical and/or biochemical reactor and/or for extractions, separations and purifications in centrifugal partition chromatography (CPC), from the laboratory to the industrial scale and to any other device and application requiring to circulate one or more fluids, such as organic or non-organic solvents, ionic liquids, CO₂ in liquid or supercritical phase and corresponding devices.

14. Use of the universal rotor according to any one of claims 1 to 12, in operations requiring the subjecting of fluids to centrifugal accelerations in the context of operations requiring the circulation of single-phase or multi-phase fluids, for purification, extraction, separation, centrifugal partition chromatography (CPC), liquid-liquid extractions

15. Use of the universal rotor according to any one of claims 1 to 12, in operations requiring the subjecting of fluids to centrifugal accelerations in the context of operations requiring the circulation of single-phase or polyphase fluids, for chemical and biochemical reactions.
